# EUROPEAN PATENT APPLICATION

(11) **EP 4 445 710 A1**
(43) Date of publication of application: **16.10.2024**
(21) Application number: 22902541.6
(22) Date of filing: 09.12.2022
(51) Int. Cl.: A01C 7/04, A01C 7/12

(54) **PNEUMATIC SEED METER FOR PLANTERS**

(30) Priority: 09.12.2021 BR 102021024890
(71) Applicant: Strass Tech Ltda, 88508-100 Lages (BR)
(72) Inventor: STRASSER, Assis, 88501-131 Lages (BR)
(74) Representative: Clarke, Modet y Cía., S.L.
(86) International application number: PCT/BR2022/050490
(87) International publication number: WO 2023/102632

(57) **Abstract**

The present invention relates to a pneumatic seed meter for planters which, according to its features, provides a pneumatic meter (1) having a specific mechanical structure integrated in planters and based on a structural fairing (2), two pulleys, an upper pulley (8) and a lower pulley (10), a seed conveyor belt (11) and an electric motor reducer drive (9), aimed at completely optimizing seed dispensing processes directly to the soil by an agricultural planter, the seeds being deposited in a perfectly uniform manner (without gaps or repetitions), together with increased safety and ergonomics for the operators and based on a highly robust, safe and versatile pneumatic meter (1).

## Description

### Field of Application

The present invention pertains to the field of technologies applied to agricultural equipment; especially, it is related to metering mechanisms capable of administering seeds by pneumatic means, in the field of precision agriculture.

### Backgrounds of the Invention

Seed meters are agricultural implements designed to optimize the agricultural planting process by standardizing the deposition of seeds in the cultivation soil, standardizing the distance between the different seeds throughout the entire cultivation area, as well as eliminating the occurrence of more than one seed in the same point in the cultivation soil - multiples, and absence of seeds in one point in the cultivation soil - failures.

The present invention refers to agricultural implements in general, more specifically to a pneumatic seed meter for planters that, according to its general features, has as its basic principle to provide the formation of a pneumatic meter in its own and specific structure of mechanical type integrated into the planters and based on a structuring fairing, two movement pulleys, a seed conveyor belt and an electric drive motor, in order to enable, in an extremely practical, safe and precise way, a complete optimization in seed distribution procedures directly on the agricultural cultivation soil from an agricultural planter with a conveyor belt seed transport system with perfect uniformity in this deposition of seeds (without failures and multiplicity - equidistant), combined with high safety and ergonomics for operators and, based on a pneumatic meter with great strength, safety and versatility.

The proposed pneumatic meter has a specific and easily accessible structure and shape for better adaptation and safety of the users, features of practical handling and functionality, affordable costs and, due to its general features and dimensions, it is adaptable to a wide range of planters, seeds, agricultural crops, users and locations in general, regardless of the features they may present.

### State of the Art

Nowadays, several models of seed meters applicable or not to planters are known from the current state of the art, which, despite being widely used in the most diverse types of agricultural crops, present some important drawbacks that hinder their operability as, for example, high dimensions and weight of the assembly, high complexity in handling and maintenance, large number of components and high energy demand for its operation like hydraulic ones.

In turn, the distribution of seeds on agricultural soil carried out by these known seed meters is necessarily carried out by implements comprising at least one rotating seed distribution disc, a tube or duct carrying seed and/or air/pressure, air/pressure and/or suction generating turbines, and gears and mechanical reducers for moving components, as well as electronic sensors for counting and/or releasing seeds.

The inconvenience of applying/using these implements is the constant need for routine adjustments and periodic maintenance, mainly because they are based on mechanical and electronic equipment susceptible to the action of bad weather and the aggressiveness of the constituents of the agricultural soils, which can cause frequent mismatches in the distribution of the seeds on agricultural soil, as well as seed breakage and the need for high mechanical force/energy.

In this line, it has become essential for farmers who use seed planters to structure a versatile, practical, safe and precise seed metering implement capable of allowing complete optimization in seed distribution procedures directly into the agricultural cultivation soil, primarily, a uniformity in the distribution of the seeds in the soil, with gains in agility and safety, preventing deposition failures or even multiplicity of deposition at the same point of the seeds, as well as respecting the cultivation principles of each one of the agricultural crops.

In this context, in a broad analysis of the literature with the aim of establishing the current state of the art regarding seed meters implemented in agricultural planters, particularly pneumatic seed meters, object of the present invention, publications of the state of the art were identified that describe this type of implement. However, the same structural and operational set defined by the present pneumatic meter is not found in any of the publications of the state of the art, which is based on a system for transporting seeds by conveyor belt or ribbon (pneumatic) between a collection chamber (lung) and a suction chamber (negative air) that allows seeds to be deposited in the cultivation soil without the need for a carrier tube. Above all, all documents found in the state of the art define systems and devices dependent on the energy of the implements to which they are applied, whereas the present invention proposes a precision pneumatic meter in which the driving force used is generated by its own components, without the use of components external to the meter itself.

In this way, the present invention is characterized by bringing together components and processes in a different design, which will meet the different requirements that the nature of the use demands, that is, deposition of seeds in a uniform and precise way on agricultural soil. The proposed design guarantees a pneumatic meter of great efficiency, functionality, strength, durability, safety, versatility, precision, ergonomics and economy, due to the excellent added technical qualities, which provides advantages and improvements in the planting procedures of agricultural crops by means seeds from agricultural planters and whose general features differ from other forms and models of seed meters known by the current state of the art.

In this design, the present invention consists of the use of a modern, efficient, safe and functional pneumatic seed meter for planters formed by a set of mechanical and agricultural solutions correctly incorporated, composing a complete and differentiated pneumatic meter, details of excellent finishing and its own features, which incorporates its own autonomous structure, specific in terms of its mechanics, of high durability and strength, and containing a fairing as a structuring and sealing element of the pneumatic meter, two pulleys as movement elements of the conveyor belt, a conveyor belt as an element for housing and transporting the seeds inside the pneumatic meter, and an electric motor as an element for supplying mechanical energy to the upper pulley, which are perfectly integrated and symmetrically arranged, dedicated to the meter itself, in order to enable the formation of a unique, complete and safe set, whose internal and external shapes and arrangements enable perfect adaptation to the most diverse types of planters and seeds in general, being specially designed for these purposes with its own geometry. It should be emphasized that, since the present meter comprises its own electric motor as an element of supplying mechanical energy to its upper pulley, the operation of the described meter is independent of external elements, so that the driving force for its operation is generated by the its own components.

In this way, the general design of the present pneumatic seed meter for planters, object of the present patent of invention, is based entirely on its robust structure, at the same time with a minimum required number of components, and extremely simplified, safe and optimized operation, combined with very practical manufacturing and maintenance procedures, in order to generate a seed meter based on a seed transport system by conveyor belt or ribbon, pneumatic transport system, where the seed grains are collected directly of a lung (collection chamber) and are fixed through a negative air suction system (suction chamber) which causes the seeds to be perfectly fixed to the same and, by means of the displacement of the conveyor belt or ribbon, they are deposited directly into the cultivation soil without the need for a carrier tube and in a completely uniform way - regularly spaced (equidistant) way.

The present pneumatic meter is based on the application of components and processes in a different design, without, however, reaching a high degree of sophistication and complexity, making it possible to solve some of the main drawbacks of other forms and models known to the current state of the art, and used in seed deposition procedures on agricultural soil, which are located in a work range in which there is difficulty in use and application, low efficiency and performance, frequent accidents, great deterioration and fragility, low durability and strength, low versatility, high costs, high overall volume and weight and low ergonomic capacity.

### Brief Description of the Invention

Precisely, in its described preferred embodiment, the present invention describes a pneumatic seed meter for planters (1), corresponding to a mechanical-pneumatic structure compatible with a plurality of seed planters, comprising at least one oblong fairing (2), with an oblong main body (3), arranged symmetrically along the entire length of a left side face of the fairing (2), and, additionally, an oblong closing cover (4), arranged symmetrically along the entire length of a right side face of the fairing (2); a seed outlet nozzle (7) at the lower end of the fairing (2); an upper traction pulley (8) with a hollow structure to allow air passage through the same pulley, arranged in parallel to the adjacent internal faces of the main body (3) and the closing cover (4), and interconnected to an electric motor reducer (9), wherein said electric motor reducer (9) is interconnected symmetrically and perpendicularly arranged to the upper traction pulley (8) and parallel to an adjacent external face of the main body (3); a lower guide pulley (10) completely closed in order to prevent air passage through the same pulley, arranged in parallel to the adjacent internal faces of the main body (3) and the closing cover (4); a conveyor belt (11) arranged symmetrically stretched between the upper traction pulley (8) and lower guide pulley (10), and in parallel between and along the adjacent internal faces of the main body (3) and closing cover (4), wherein said conveyor belt (11) comprises a set of housing cavities (11A) arranged in parallel and symmetrically spaced along the entire length of its external face, and a set of suction holes (11B), each arranged symmetrically centered in and passing through a housing cavity (11A), and a suction chamber (B) arranged symmetrically in a cavity of the fairing (2) between the internal faces of the conveyor belt (11) and the internal faces of the fairing (2). Additionally, in the preferred embodiment disclosed by the present invention, the fairing (2) is arranged symmetrically along the entire length of the pneumatic meter (1) and comprises said main body (3), wherein said main body (3) has a circular lower opening (3A) symmetrically arranged centered at its lower end, a circular upper opening (3B) symmetrically arranged at its anterior-superior end, a posterior coupling (3C) arranged perpendicularly and symmetrically on its posterior face, an oblong internal recess (3D) arranged in parallel and symmetrically along the entire lower length of its internal side face, an upper coupling (3E) arranged perpendicularly and symmetrically at its superior-posterior end, a semicircular lower opening (3F) arranged symmetrically at its lower end, an oblong internal partition (3G) arranged in parallel and symmetrically spaced along the entire length of the internal recess (3D) with lower closure, and two internal projections (3H) arranged in parallel and symmetrically aligned and spaced to the along the internal posterior end of the internal recess (3D).

Furthermore, the fairing (2) comprises the aforementioned closing cover (4), which has a circular lower opening (4A) and is arranged symmetrically centered in its lower end and aligned with the lower opening (3A), with a circular upper opening (4B) symmetrically arranged centered in its upper end and aligned with the upper opening (3B), an oblong internal recess (4C) arranged in parallel and symmetrically along the entire lower length of its internal side face, a semicircular lower opening (4D) symmetrically arranged at its lower end, and a semicircular upper opening (4E) symmetrically arranged along its superior-posterior ends. Preferably, the closing cover (4) is made of transparent material.

Still preferably, the fairing (2) comprises a seed inlet nozzle (5) arranged perpendicularly and symmetrically at the upper end of the fairing (2) and interconnected to the seed storage system of the planter by means of an inlet hose with quick-coupling type connections and a collection chamber (A); a suction air inlet nozzle (6) arranged perpendicularly and symmetrically at the upper end of the fairing (2) and interconnected to the air suction system of the planter by means of an inlet hose with quick-coupling type connections and the suction chamber (B); and said seed outlet nozzle (7) arranged symmetrically in the alignment of the lower opening (3F) and the lower opening (4D).

Particularly, the aforementioned upper traction pulley (8) is arranged symmetrically centered between the upper openings (3B) and (4B), preferably, by means of anti-wear bushings. In turn, said lower guide pulley (10) is arranged symmetrically centered between the lower openings (3A) and (4A), preferably by means of anti-wear bushings.

Further, in the described preferred embodiment, said collection chamber (A) is arranged symmetrically in a cavity of the fairing (2), between the external faces of the conveyor belt (11) and the internal faces of the fairing (2). Optionally, the meter that is object of the present invention comprises a third intermediate guide pulley, in addition to the upper traction pulley (8) and the lower guide pulley (10), arranged symmetrically adjacent to the lower guide pulley (10) by means of anti-wear bushings and in parallel to the adjacent internal faces of the main body (3) and the closing cover (4).

### Brief Description of the Figures

The objectives, advantages and other important features of the patent in question can be more easily understood when read together with the attached figures, in which:
Figure 1A represents an anterior perspective view of the pneumatic seed meter for planters.
Figure 1B represents a posterior perspective view of the pneumatic seed meter for planters.
Figure 1C represents a left side view of the pneumatic seed meter for planters.
Figure 1D represents a right side view of the pneumatic seed meter for planters.
Figure 1E represents a top view of the pneumatic seed meter for planters.
Figure 1F represents a bottom view of the pneumatic seed meter for planters.
Figure 1G represents an anterior view of the pneumatic seed meter for planters.
Figure 1H represents a posterior view of the pneumatic seed meter for planters.
Figure 2A represents an exploded anterior perspective view of the pneumatic seed meter for planters.
Figure 2B represents an exploded posterior perspective view of the pneumatic seed meter for planters.

### Detailed Description of the invention

The present invention relates to a pneumatic seed meter for planters, as represented in figure 1A in general. In particular, the device disclosed by the present invention comprises a complete pneumatic meter (1) and with its own features, which incorporates its own specific mechanical structure, of high durability and strength, internal and external shapes and arrangements that adapt to the more diverse types of planters and seeds in general, and containing perfectly integrated and symmetrically arranged:
- an oblong fairing (2), arranged symmetrically along the entire length of the pneumatic meter (1) and consisting of
   - an oblong main body (3), arranged symmetrically along the entire length of the left side face of the fairing (2) and having a circular lower opening (3A) symmetrically arranged centered at its lower end, a circular upper opening (3B) symmetrically arranged at its anterior-superior end, a posterior coupling (3C) arranged perpendicularly and symmetrically on its posterior face, an oblong internal recess (3D) arranged in parallel and symmetrically along the entire lower length of its internal side face, an upper coupling (3E) arranged perpendicularly and symmetrically at its superior-posterior end, a semicircular lower opening (3F) symmetrically arranged at its lower end, an oblong internal partition (3G) arranged in parallel and symmetrically spaced along the entire length of the internal recess (3D) with lower closure, and two internal projections (3H) arranged in parallel and symmetrically aligned and spaced along of the internal posterior end of the internal recess (3D);
   - an oblong closing cover (4), arranged symmetrically along the entire length of the right side face of the fairing (2), its internal face, and having a circular lower opening (4A) symmetrically arranged centered in its lower end and aligned to the lower opening (3A), a circular upper opening (4B) symmetrically arranged centered at its upper end and aligned with the upper opening (3B), an oblong internal recess (4C) arranged parallel and symmetrical along the entire lower length on its internal side face, a semicircular lower opening (4D) symmetrically arranged at its lower end, and a semicircular upper opening (4E) symmetrically arranged along its superior-posterior ends;
   - a seed inlet nozzle (5) arranged perpendicularly and symmetrically at the upper end of the fairing (2) and interconnected to the seed storage system of the planter by means of an inlet hose with quick-coupling type connections and the collection chamber (A);
   - a suction air inlet nozzle (6) arranged perpendicularly and symmetrically at the upper end of the fairing (2) and interconnected to the air suction system of the planter by means of an inlet hose with quick-coupling type connections and the suction chamber (B); and
   - a seed outlet nozzle (7) arranged symmetrically in the alignment of the lower opening (3F) and the lower opening (4D) at the lower end of the fairing (2);
- an upper traction pulley (8) arranged symmetrically centered between the upper openings (3B) and (4B) by means of anti-wear bushings and in parallel to the adjacent internal faces of the main body (3) and the closing cover (4) and interconnected to the electric motor reducer (9);
- an electric motor reducer (9) arranged symmetrically and perpendicularly interconnected to the upper traction pulley (8) and parallel to the adjacent external face of the main body (3);
- a lower guide pulley (10) arranged symmetrically centered between the lower openings (3A) and (4A) by means of anti-wear bushings and parallel to the adjacent internal faces of the main body (3) and the closing cover (4);
- a conveyor belt (11) arranged symmetrically stretched between the upper traction pulley (8) and lower guide pulley (10) and in parallel between and along the adjacent internal faces of the main body (3) and closing cover (4), and having a set of housing cavities (11A) arranged in parallel and symmetrically spaced along the entire length of its external face, and a set of suction holes (11B) each arranged symmetrically centered and passing through a housing cavity (11A);
- a collection chamber (A) arranged symmetrically in a cavity in the fairing (2) between the external faces of the conveyor belt (11) and the internal faces of the fairing (2);
- a suction chamber (B) arranged symmetrically in a cavity of the fairing (2) between the internal faces of the conveyor belt (11) and the internal faces of the fairing (2); and
- an inlet hose arranged symmetrically interconnecting the seed reservoir of the seed planter to the collection chamber (A).

The pneumatic seed meter for planters, depending on the application needs, can be comprised of a third intermediate guide pulley, in addition to the two existing ones - upper traction pulley (8) and lower guide pulley (10), arranged symmetrically adjacent the lower guide pulley (10) by means of anti-wear bushings and in parallel to the adjacent internal faces of the main body (3) and the closing cover (4), in order to provide greater precision and traction to the conveyor belt (11) and, consequently, to the seed distribution.

The main body (3), fixed to the planter by means of fasteners as an integral part of the fairing (2), has the basic functions of grouping and housing the other components of the pneumatic meter (1), as well as serving as support for the pneumatic meter (1) on the seed planter and connecting the hoses of the seed reservoir and the air suction system of the planter by means of quick-couplings.

The closing cover (4), fixed parallel to the internal face of the main body (2) as an integral part of the fairing (2), is responsible for visualizing the seeds inside the pneumatic meter (1), as well as sealing the fairing (2), preventing the entry of external dirt, and the functioning of the mechanisms inside the collection chamber (A).

The upper traction pulley (8), interconnected directly to the electric motor reducer (9) in the upper internal part of the pneumatic meter (1), has the basic functions of tractioning, guiding and supporting the conveyor belt (11) by means of similar cavities the gears and driving force generated by the electric motor reducer (9), wherein its fixation to the fairing (2) is carried out by anti-wear bushings that allow its rotating movement.

The lower guide pulley (10), arranged in the lower part of the pneumatic meter (1) and with passive movement driven by means of the contact with the conveyor belt (11), which is moved by the upper traction pulley (8), presents as basic functions to serve as a guide in sliding contact with the lower part of the conveyor belt (11), as well as cutting off the flow of negative pressure, which causes the seeds to be deposited directly into the soil by gravity. It is fixed to the fairing (2) using anti-wear bushings that allow it to rotate.

The conveyor belt (11) consists of housing cavities (11A) and suction holes (11B) for respectively the functions of housing and fixing the seeds coming directly from the reservoir of the collection chamber (A) of the fairing (2), wherein the attachment of the seeds to the conveyor belt (11), more specifically to the housing cavities (11A), is carried out directly by means of the suction from the suction chamber (B) that passes through the suction holes (11B).

The conveyor belt (11) is also responsible for the physical separation between the collection chamber (A) and suction chamber (B) inside the fairing (2), so that there is air communication between the collection chamber (A) and the suction chamber (B), through the suction holes (11B) of the conveyor belt (11).

The electric motor reducer (9), fixed to the side face of the main body (3), is responsible for supplying mechanical energy directly to the upper traction pulley (8), allowing its rotating movement, as well as the respective components interconnected to the pulley upper tractor (8). Due to this arrangement of the electric motor reducer (9), it is possible to obtain the generation of the driving force by the device itself for its operation independent of the action of elements external to the components of the invention.

The seed outlet nozzle (7), centered in the lower end of the fairing (2) and adjacent to the cultivation soil, is the component of the pneumatic meter (1) responsible for providing the exit by gravity of the seeds from the collection chamber (B) to the cultivation soil.

The collection chamber (A) is the internal cavity of the main body (3) connected to the seed storage system of the planter and in direct contact with the external face of the conveyor belt (11), in which these are conveyed in this chamber collector (A).

The suction chamber (B) is the internal cavity of the main body (3), which has an air suction outlet connected to the air suction system of the seed planter, being responsible for conveying the negative pressure produced by the seed planter to the internal part of the conveyor belt (11), allowing the seeds to be fixed in the housing cavities (11A).

The inlet hose is responsible for taking the seeds from the seed reservoir of the seed planter directly to the collection chamber (A) of the pneumatic meter (1).

It should be highlighted that the pneumatic seed meter for planters has a compact geometric configuration and robust structure, allowing it to be installed in models of agricultural planters, even the most compact ones, as well as being structured on them by means of a simple fixed support/joint point configured by means of its fairing (2).

The pneumatic seed meter for planters operates based on its correct and articulated positioning next to the agricultural seed planters, as well as on a seed transport system using a conveyor belt (11) or ribbon between upper traction pulley (9) and lower guide pulley (10) integrated into a collection chamber (lung) (A) and a suction chamber (negative air) (B).

By means of its operating principle, the seeds are taken from the seed storage reservoir of the seed planter to the collection chamber (lung) (A) by means of the seed entry nozzle (5). Due to the suction of air from the suction chamber (B) by means of the suction air inlet nozzle (6) of the seed planter, the seeds are sucked through the suction holes (11B) of the conveyor belt (11), located in the base of each housing cavity (11A) - housing, being perfectly adhered to the outside of each of these housings.

With the seeds adhered to their housings - housing cavities (11A), on the outside of the conveyor belt (11), the seeds are moved to the other side of the main body (3) by the movement (rotation) of the conveyor belt (11) inside the collection chamber (A). In a position close to the cultivation soil, the lower end of the pneumatic meter (1), the suction holes (11B) of each of the housing cavities (11A) of the conveyor belt (11) are blocked individually by the lower guide pulley (10), completely interrupting the suction pressure therein, in order to release the seeds by gravity, which, in turn, are guided each one by means of the seed outlet nozzle (7) to a regularly spaced position in the agricultural soil prepared for planting by the agricultural planter.

The pneumatic seed meter for planters, as its components are fully integrated with each other and the agricultural planters, is assembled and disassembled in an agile manner, in which nothing comes loose and nothing has to break or bend, achieving a high performance and efficiency index, combined with high durability and absolute safety. After being fully integrated with each other and the agricultural planters, the components remain locked and cohesive, thus preventing them from coming loose on their own when in use, leaving the set fully available for seed deposition procedures in a uniform way on the cultivation soil. In this way, the pneumatic meter (1) can be used without any concerns whatsoever, mainly regarding the durability and safety of its components, as well as the safety of the operators.

The pneumatic seed meter for planters presents specific innovative advantages, primarily in comparison with systems widely known in the current art based on pneumatic systems: a simpler structuring that requires a smaller number of components in its structuring, as well as reduced dimensions and weight of the assembly; a high efficiency in seed metering in the cultivation soil without the occurrence of failures and multiplicity in the seed deposition; less complexity in its operation and maintenance, generating greater reliability with lower costs; an operational cycle with shorter times and lower costs, generating reduced energy demand in its operational stages; and the driving force coming from its own components, independent of the generation coming from parts external to the component parts of the meter itself.

From all that has been disclosed, this is an agricultural implement that will be well received by farmers and manufacturers of seed planters in general, as the pneumatic seed meter for planters has numerous advantages, such as: great safety, reliability and agility in application; great yield and performance in its application due to its general design; high comfort, convenience and safety for the users; high strength and durability of the assembly as a whole; fully accessible costs, which allows for an excellent cost/benefit ratio; practical and safe use by any user; large range; very low and practical general maintenance; perfect and direct adaptation to the most diverse types of seeds, agricultural soils and agricultural crops; high operational precision; fully compatible weight and general dimensions; and the certainty of having a pneumatic meter (1) that fully complies with current legislation and standards and the basic conditions necessary for its application such as safety, precision and performance.

All these attributes allow classifying the pneumatic seed meter for planters as a completely versatile, efficient, practical and safe means for depositing procedures in an optimized and uniform way for a wide range of seeds in the most diverse types of cultivation soils, in the most diverse locations and by the most diverse users by using planters, however not being limited at any time to the representations described herein, and must be understood in its broad scope of claim, that is, not being limited to the specific form disclosed, and that other forms may be understood as wholly included within the scope of the appended claims.

## Claims

1. A pneumatic seed meter for planters (1), **characterized in that** it is a mechanical-pneumatic structure compatible with a plurality of seed planters, comprising:
- an oblong fairing (2), with an oblong main body (3), arranged symmetrically along the entire length of a left side face of the fairing (2), and, additionally, an oblong closing cover (4), arranged symmetrically along the entire length of a right side face of the fairing (2);
- a seed outlet nozzle (7) at the lower end of the fairing (2);
- an upper traction pulley (8) with a hollow structure to allow air passage through the same pulley, arranged in parallel to the adjacent internal faces of the main body (3) and the closing cover (4), and interconnected to an electric motor reducer (9),
wherein the electric motor reducer (9) is arranged symmetrically and perpendicularly interconnected to the upper traction pulley (8) and parallel to an adjacent external face of the main body (3);
- a lower guide pulley (10) completely closed to prevent air passage through the same pulley, arranged in parallel to the adjacent internal faces of the main body (3) and the closing cover (4);
- a conveyor belt (11) arranged symmetrically stretched between the upper traction pulley (8) and lower guide pulley (10), and in parallel between and along the adjacent internal faces of the main body (3) and closing cover (4), wherein the conveyor belt (11) comprises a set of housing cavities (11A) arranged in parallel and symmetrically spaced along the entire length of its external face, and a set of suction holes (11B), each arranged symmetrically centered and passing through a housing cavity (11A), and
- a suction chamber (B) arranged symmetrically in a cavity of the fairing (2) between the internal faces of the conveyor belt (11) and the internal faces of the fairing (2).

2. The meter (1) according to claim 1, **characterized in that** the fairing (2) is arranged symmetrically along the entire length of the pneumatic meter (1) and comprises:
- the main body (3), wherein said main body (3) has a circular lower opening (3A) symmetrically arranged centered at its lower end, a circular upper opening (3B) symmetrically arranged at its anterior-superior end, a posterior coupling (3C) arranged perpendicularly and symmetrically on its posterior face, an oblong internal recess (3D) arranged in parallel and symmetrically along the entire lower length of its internal side face, an upper coupling (3E) arranged perpendicularly and symmetrically at its superior-posterior end, a semicircular lower opening (3F) symmetrically arranged at its lower end, an oblong internal partition (3G) arranged in parallel and symmetrically spaced along the entire length of the internal recess (3D) with lower closure, and two internal projections (3H) arranged in parallel and symmetrically aligned and spaced along the internal posterior end of the internal recess (3D);
- the closing cover (4), wherein said closing cover (4) has a circular lower opening (4A) arranged symmetrically centered in its lower end and aligned with the lower opening (3A), a circular upper opening (4B) symmetrically arranged centered in its upper end and aligned with the upper opening (3B), an oblong internal recess (4C) arranged in parallel and symmetrically along the entire lower length of its internal side face, a semicircular lower opening (4D) arranged symmetrically at its lower end, and a semicircular upper opening (4E) arranged symmetrically along the extension of its superior-posterior ends;
- a seed inlet nozzle (5) arranged perpendicularly and symmetrically at the upper end of the fairing (2) and interconnected to the seed storage system of the planter by means of an inlet hose with quick-coupling type connections and a collection chamber (A);
- a suction air inlet nozzle (6) arranged perpendicularly and symmetrically at the upper end of the fairing (2) and interconnected to the air suction system of the planter by means of an inlet hose with quick-coupling type connections and the suction chamber (B); and
- the seed outlet nozzle (7) arranged symmetrically in the alignment of the lower opening (3F) and the lower opening (4D).

3. The meter (1) according to claim 1, **characterized in that**:
- the upper traction pulley (8) is arranged symmetrically centered between the upper openings (3B) and (4B), preferably, by means of anti-wear bushings, and
- the lower guide pulley (10) is arranged symmetrically centered between the lower openings (3A) and (4A), preferably by means of anti-wear bushings.

4. The meter (1) according to claim 1, **characterized in that** it additionally comprises the collection chamber (A) arranged symmetrically in a cavity of the fairing (2), between the external faces of the conveyor belt (11) and the internal faces of the fairing (2).

5. The meter (1) according to claim 1, **characterized in that** it optionally comprises a third intermediate guide pulley, in addition to the upper traction pulley (8) and the lower guide pulley (10), arranged symmetrically adjacent to the lower guide pulley (10) by means of anti-wear bushings and in parallel to the adjacent internal faces of the main body (3) and the closing cover (4).

6. The meter (1) according to claim 1, **characterized in that**, preferably, the closing cover (4) is made of transparent material.
